# EUROPEAN PATENT APPLICATION

(11) **EP 4 541 825 A1**
(43) Date of publication of application: **23.04.2025**
(21) Application number: 23824019.6
(22) Date of filing: 16.06.2023
(51) Int. Cl.: C08F 2/04, C08F 214/26

(54) **METHOD FOR PRODUCING PERFLUOROELASTOMER**

(30) Priority: 17.06.2022 JP 2022097886
(71) Applicant: DAIKIN INDUSTRIES, LTD., Osaka-shi, Osaka 530-0001 (JP)
(72) Inventor: FURUTANI, Takahiro, Osaka-Shi, Osaka 530-0001 (JP); IWASAKA, Takuma, Osaka-Shi, Osaka 530-0001 (JP); SUMINO, Eisaku, Osaka-Shi, Osaka 530-0001 (JP); IRIE, Masaki, Osaka-Shi, Osaka 530-0001 (JP)
(74) Representative: Hoffmann Eitle
(86) International application number: PCT/JP2023/022505
(87) International publication number: WO 2023/243729

(57) **Abstract**

Provided is: a method for producing a perfluoroelastomer, the method comprising polymerizing tetrafluoroethylene (1) and a perfluoromonomer (2) other than the tetrafluoroethylene (1) in a reaction vessel to produce the perfluoroelastomer, in which the volume of water and a fluorine-containing solvent occupying the internal volume of the reaction vessel is 2.0% by volume or less.

## Description

### TECHNICAL FIELD

The present disclosure relates to a method for producing a perfluoroelastomer.

### BACKGROUND ART

Patent Document 1 describes a method for producing a fluoropolymer, including polymerizing tetrafluoroethylene or chlorotrifluoroethylene in the presence of a peroxydicarbonate to obtain a fluoropolymer, wherein the peroxydicarbonate is represented by the general formula:

R-O-C(=O)-O-O-C(=O)-O-R

wherein R is the same or different and represents an alkyl group or an alkoxyalkyl group having 4 carbon atoms.

### RELATED ART

### PATENT DOCUMENTS

Patent Document 1: Japanese Patent Laid-Open No. 2015-7218

### SUMMARY OF THE INVENTION

### PROBLEM TO BE SOLVED BY THE INVENTION

An object of the present disclosure is to provide a method for production capable of producing a perfluoroelastomer using no or almost no water and fluorine-containing solvent.

### MEANS FOR SOLVING THE PROBLEM

According to the present disclosure, there is provided a method for producing a perfluoroelastomer, the method including polymerizing tetrafluoroethylene (1) and a perfluoromonomer (2) other than tetrafluoroethylene (1) in a reaction vessel to produce a perfluoroelastomer, wherein a volume of water and a fluorine-containing solvent occupying an internal volume of the reaction vessel is 2.0% by volume or less.

### EFFECTS OF INVENTION

According to the present disclosure, it is possible to provide a method for production capable of producing a perfluoroelastomer using no or almost no water and fluorine-containing solvent.

### DESCRIPTION OF EMBODIMENTS

Hereinafter, specific embodiments of the present disclosure will be described in detail, but the present disclosure is not limited to the following embodiments.

Patent Document 1 describes that polymerization for obtaining a fluoropolymer is performed by emulsion polymerization, suspension polymerization, solution polymerization, or bulk polymerization. However, no method has been known to date for producing a perfluoroelastomer using no or almost no water and a fluorine-containing solvent by the method such as bulk polymerization.

The method for production disclosed herein is a method for production for producing a perfluoroelastomer by polymerizing tetrafluoroethylene (1) and a perfluoromonomer (2) other than tetrafluoroethylene (1) in a reaction vessel, wherein upon polymerization, a volume of water and a fluorine-containing solvent occupying an internal volume of the reaction vessel is set to 2.0% by volume or less. Therefore, according to the method for production of the present disclosure, not only can a perfluoroelastomer be produced smoothly, but the perfluoroelastomer can be recovered without carrying out a coagulation step that has been necessary in conventional production methods. Moreover, in the conventional production methods, a solvent containing a coagulant has been generated after coagulation, however, the coagulation step that has become unnecessary enables avoiding such a solvent. Furthermore, since there is no need to use a coagulant such as a metal salt or an acid, even when the perfluoroelastomer is produced using a metal pipe or tank, the perfluoroelastomer can be avoided from being contaminated with metal components derived from the coagulant or metal components generated by corrosion of the metal pipe or tank.

The volume of water and the fluorine-containing solvent occupying the internal volume of the reaction vessel is 2.0% by volume or less, preferably 1.0% by volume or less, and more preferably 0.1% by volume or less. In the method for production of the present disclosure, for example, a reaction vessel may be charged with a solution in which a polymerization initiator has been dissolved in a fluorine-containing solvent, however, it is necessary to control the amount of fluorine-containing solvent to be charged into the reaction vessel within the above-described numerical range.

The internal volume of the reaction vessel can be determined, for example, by measuring the volume of water required to fill the reaction vessel.

In the method for production of the present disclosure, no or almost no water and fluorine-containing solvent are used upon polymerization. The "fluorine-containing solvent" is a compound that contains fluorine and includes an inactive compound used as a solvent, but is free of a compound that reacts with other compounds in a polymerization reaction, such as a monomer, a polymerization initiator, a chain transfer agent, and a polymerization terminator.

In the method for production of the present disclosure, it is also one preferred embodiment thereof that the volume of water, a fluorine-containing solvent, and carbon dioxide, occupying the internal volume of the reaction vessel is 2. 0% by volume or less. The carbon dioxide also includes supercritical carbon dioxide (carbon dioxide in a supercritical state).

In the method for production of the present disclosure, it is also one preferred embodiment that the volume of the water, fluorine-containing solvent and fluorine-free solvent (with the proviso that water is excluded), occupying the internal volume of the reaction vessel is 2.0% by volume or less. That is, in the method for production of the present disclosure, no or almost no inert solvent is preferably used upon polymerization.

The volume of the water, fluorine-containing solvent and fluorine-free solvent (provided that water is excluded), occupying the internal volume of the reaction vessel is preferably 2.0% by volume or less, more preferably 1.0% by volume or less, and still more preferably 0.1% by volume or less. In the method for production of the present disclosure, for example, a reaction vessel may be charged with a solution in which a polymerization initiator has been dissolved in a fluorine-containing solvent or a fluorine-free solvent, however, it is necessary to control the amount of the fluorine-containing solvent or fluorine-free solvent to be charged into the reaction vessel within the above-described numerical range.

In the method for production of the present disclosure, upon polymerization, the perfluoromonomer (2) is preferably at least partially present as liquid in the reaction vessel. The perfluoromonomer (2) at least partially present as liquid allows a polymerization reaction of tetrafluoroethylene (1) and perfluoromonomer (2) to proceed smoothly. Appropriately adjusting a polymerization temperature and an internal pressure of the reaction vessel and appropriately selecting the type of perfluoromonomer (2) enables the perfluoromonomer (2) to be at least partially present as liquid during a polymerization reaction. It is also one preferred embodiment in the method for production of the present disclosure that the perfluoromonomer (2) is allowed to be at least partially present as liquid in the reaction vessel throughout a period from the start to completion of the polymerization reaction.

In the method for production of the present disclosure, upon polymerization, an internal pressure of the reaction vessel is preferably equal to or higher than the saturated vapor pressure of the perfluoromonomer (2) at a temperature of liquid in the reaction vessel. Increasing the internal pressure of the reaction vessel to equal to or higher than the saturated vapor pressure facilitates the perfluoromonomer (2) to be at least partially present as liquid in the reaction vessel upon polymerization, making it possible for a polymerization reaction of the tetrafluoroethylene (1) and perfluoromonomer (2) to proceed smoothly. The internal pressure of the reaction vessel can be adjusted by the amount of tetrafluoroethylene (1) to be introduced under pressure into the reaction vessel. It is also preferred for one embodiment in the method for production of the present disclosure to maintain the internal pressure of the reaction vessel equal to or higher than the saturated vapor pressure of the perfluoromonomer (2) at a temperature of liquid in the reaction vessel throughout a period from the start to completion of the polymerization reaction.

In the method for production of the present disclosure, the internal pressure of the reaction vessel upon polymerization is, for example, 0.05 to 10 MPaG. It is also preferred for one embodiment to adjust the internal pressure of the reaction vessel upon polymerization within a range of 0.05 to 10 MPaG so that it is equal to or higher than the saturated vapor pressure of the perfluoromonomer (2) at a temperature of liquid in the reaction vessel.

In the method for production of the present disclosure, a polymerization temperature is, for example, 5 to 120°C. It is also one preferred embodiment that the polymerization temperature is adjusted within a range of 5 to 120°C such that an internal pressure of the reaction vessel upon polymerization is equal to or higher than the saturated vapor pressure of the perfluoromonomer (2) at a temperature of liquid in the reaction vessel.

In the method for production of the present disclosure, the tetrafluoroethylene (1) and perfluoromonomer (2) other than the tetrafluoroethylene (1) are polymerized.

In the present disclosure, the perfluoromonomer is a monomer that is free of a carbon atom-hydrogen atom bond in the molecule with the proviso that when the perfluoromonomer is a monomer that provides a crosslinking site, the crosslinking site may contain a carbon atom-hydrogen atom bond. The perfluoromonomer may be a monomer containing carbon atoms and fluorine atoms in which some of the fluorine atoms bonded to any of the carbon atoms are replaced by chlorine atoms, and may be a monomer containing nitrogen atom, oxygen atom, sulfur atom, phosphorus atom, boron atom, or silicon atom in addition to the carbon atoms.

In the present disclosure, the monomer that provides a crosslinking site is a monomer (cure-site monomer) having a crosslinkable group that provides the fluoropolymer with a crosslinking site for forming a crosslink. Examples of the crosslinking sites include, for example, -I, -CH₂I, -Br, - CH₂Br, -CN, a carboxyl group, an alkoxycarbonyl group, a hydroxyl group, a vinyl group, an azide group, a sulfonyl azide group, a carbonyl azide group, an alkyne group (for example, an ethynyl group).

Examples of the perfluoromonomers (2) other than the tetrafluoroethylene (1) include, for example,
hexafluoropropylene [HFP];
a fluoromonomer represented by the general formula (21):

   CF₂=CF-ORf¹³

   wherein Rf¹³ represents a perfluoroalkyl group having 1 to 8 carbon atoms;
a fluoromonomer represented by the general formula (22):

   CF₂=CFOCF₂ORf₁¹⁴

   wherein Rf¹⁴ represents a perfluoroalkyl group having 1 to 6 carbon atoms, a cyclic perfluoroalkyl group having 5 or 6 carbon atoms, or a perfluorooxyalkyl group having 2 to 6 carbon atoms and containing oxygen atom between carbon-carbon atoms;
a fluoromonomer represented by the general formula (23):

   CF₂=CFO-((CF₂)₁-CF(Y¹⁵)O)ₘ-(CF₂)ₙF

   wherein Y¹⁵ represents a fluorine atom or a trifluoromethyl group; l is an integer of 1 to 4, m is an integer of 1 to 4, and n is an integer of 1 to 4; and
a monomer providing a crosslinking site, represented by the general formula (24): CX⁴₂=CX⁵R_{f}²X⁶
wherein X⁴ and X⁵ are each independently F or a perfluoroalkyl group, R_{f}² is a perfluoroalkylene group which may have one or more oxygen atoms between carbon-carbon atoms and may have an aromatic ring, and X⁶ is -I, -CH₂I, -Br, -CH₂Br, -CN, a carboxyl group, an alkoxycarbonyl group, a hydroxyl group, a vinyl group, an azide group, a sulfonyl azide group, a carbonyl azide group, or an alkyne group (for example, an ethynyl group).

In the present disclosure, the perfluoroalkyl group and the perfluorooxyalkylene group may be either linear or branched.

The fluoromonomer represented by the general formula (21) is preferably at least one selected from the group consisting of perfluoro(methyl vinyl ether), perfluoro(ethyl vinyl ether), and perfluoro(propyl vinyl ether), more preferably at least one selected from the group consisting of perfluoro(methyl vinyl ether) and perfluoro(propyl vinyl ether), and even more preferably perfluoro(methyl vinyl ether) .

The fluoromonomer represented by the general formula (22) is preferably at least one selected from the group consisting of CF₂=CFOCF₂OCF₃, CF₂=CFOCF₂OCF₂CF₃, and CF₂=CFOCF₂OCF₂CF₂OCF₃.

The fluoromonomer represented by the general formula (23) is preferably at least one selected from the group consisting of CF₂=CFOCF₂CF(CF₃)O(CF₂)₃F,

CF₂=CFO(CF₂CF(CF₃)O)₂(CF₂)₃F, CF₂=CFO(CF₂CF(CF₃)O)₂(CF₂)₂F,

and

CF₂=CFOCF₂CF₂CF₂OCF₃.

An example of the monomer that provides a crosslinking site, represented by the general formula (24) includes a fluoromonomer represented by the general formula:

CF₂=CFO(CF₂CF(CF₃)O)ₘ(CF₂)ₙ-X²⁰¹

wherein m is an integer of 0 to 5, n is an integer of 1 to 3, and X²⁰¹ is -I, -CH₂I, -Br, -CH₂Br, -CN, a carboxyl group, or an alkoxycarbonyl group. X²⁰¹ is preferably -I, -CH₂I, -Br, - CH₂Br, or -CN.

As the monomer that provides a crosslinking site, represented by the general formula (24) is preferably at least one selected from the group consisting of
CF₂=CFOCF₂CF(CF₃)OCF₂CF₂CN, CF₂=CFOCF₂CF(CF₃)OCF₂CF₂COOH, CF₂=CFOCF₂CF(CF₃)OCF₂CF₂CH₂I, CF₂=CFOCF₂CF₂CH₂I, and CF₂=CFO(CF₂)₅CN and more preferably at least one selected from the group consisting of CF₂=CFOCF₂CF(CF₃)OCF₂CF₂CN and CF₂=CFOCF₂CF₂CH₂I.

In polymerization of the perfluoromonomer, the monomer that provides a crosslinking site (provided that the perfluoromonomer is excluded) may be polymerized together with the perfluoromonomer.

The monomer that provides a crosslinking site (provided that the perfluoromonomer is excluded) is preferably at least one selected from the group consisting of:
a fluoromonomer represented by the general formula (11):

   CX¹⁸¹₂=CX¹⁸²-R_{f}¹⁸¹CHR¹⁸¹X¹⁸³

   wherein X¹⁸¹ and X¹⁸² are each independently a hydrogen atom, a fluorine atom, or CH₃; R_{f}¹⁸¹ is a fluoroalkylene group, a perfluoroalkylene group, a fluoro(poly)oxyalkylene group, or a perfluoro(poly)oxyalkylene group; R¹⁸¹ is a hydrogen atom or CH₃; and X¹⁸³ is an iodine atom or a bromine atom;
a fluoromonomer represented by the general formula (12):

   CX¹⁹¹₂=CX¹⁹²-R_{f}¹⁹¹X¹⁹³

   wherein X¹⁹¹ and X¹⁹² are each independently a hydrogen atom, a fluorine atom, or CH₃; R_{f}¹⁹¹ is a fluoroalkylene group, a perfluoroalkylene group, a fluoropolyoxyalkylene group, or a perfluoropolyoxyalkylene group; and X¹⁹³ is an iodine atom or a bromine atom;
a fluoromonomer represented by the general formula (13):

   CH₂=CFCF₂O(CF(CF₃)CF₂O)ₘ(CF(CF₃))ₙ-X²¹¹

   wherein m is an integer of 0 to 5; n is an integer of 1 to 3; and X²¹¹ is a cyano group, a carboxyl group, an alkoxycarbonyl group, an iodine atom, a bromine atom, or-CH₂OH; and
a monomer represented by the general formula (14):

   CR²²¹R²²²=CR²²³-Z²²¹-CR²²⁴=CR²²⁵R²²⁶

   wherein R²²¹, R²²², R²²³, R²²⁴, R²²⁵, and R²²⁶ are the same as or different from each other, and are each a hydrogen atom or an alkyl group having 1 to 5 carbon atoms; Z²²¹ is a linear or branched alkylene group having 1 to 18 carbon atoms and optionally having an oxygen atom, a cycloalkylene group having 3 to 18 carbon atoms, and at least partially fluorinated alkylene or oxyalkylene group having 1 to 10 carbon atoms, or a (per)fluoropolyoxyalkylene group which is represented by:

   -(Q)ₚ-CF₂O-(CF₂CF₂O)ₘ(CF₂O)ₙ-CF₂-(Q)ₚ-

   (wherein Q is an alkylene group or an oxyalkylene group; p is 0 or 1; and m/n is 0.2 to 5) and has a molecular weight of 500 to 10,000.

X¹⁸³ and X¹⁹³ are each preferably an iodine atom. R_{f}¹⁸¹ and R_{f}¹⁹¹ are each preferably a perfluoroalkylene group having 1 to 5 carbon atoms. R¹⁸¹ is preferably a hydrogen atom. X²¹¹ is preferably a cyano group, an alkoxycarbonyl group, an iodine atom, a bromine atom, or -CH₂OH.

The monomer that provides a crosslinking site (provided that the perfluoromonomer is excluded) is preferably at least one selected from the group consisting of CH₂=CFCF₂OCF(CF₃)CF₂OCF(CF₃)CN, CH₂=CFCF₂OCF(CF₃)CF₂OCF(CF₃)COOH, CH₂=CFCF₂OCF(CF₃)CF₂OCF(CF₃)CH₂OH, CH₂=CHCF₂CF₂I, CH₂=CH(CF₂)₂CH=CH₂, and CH₂=CH(CF₂)₆CH=CH₂.

Among the perfluoromonomers (2), preferred is a monomer represented by the general formula (2): CF₂=CY-Rf-X
wherein Rf is a perfluoroalkylene group, a perfluoroalkylene group containing oxygen atom between carbon-carbon atoms, a perfluorooxyalkylene group, or a perfluorooxyalkylene group containing oxygen atom between carbon-carbon atoms, X is -F, - I, -CH₂I, -Br, -CH₂Br or -CN, and Y is F or a perfluoroalkyl group.

By using the monomer represented by the general formula (2) as the perfluoromonomer (2), the perfluoromonomer (2) is more likely to be at least partially present as liquid in a reaction vessel upon polymerization, making it possible for a polymerization reaction of the tetrafluoroethylene (1) and perfluoromonomer (2) to proceed smoothly.

In the general formula (2), Rf is preferably a perfluoroalkylene group having 1 to 12 carbon atoms, a perfluoroalkylene group having 2 to 12 carbon atoms and containing oxygen atom between carbon-carbon atoms, a perfluorooxyalkylene group having 1 to 12 carbon atoms, or a perfluorooxyalkylene group containing oxygen atom between carbon-carbon atoms.

In the general formula (2), Y is preferably F or a perfluoroalkyl group having 1 to 12 carbon atoms and more preferably F or CF₃.

Among the perfluoromonomers (2), more preferred is at least one selected from the group consisting of:
a monomer represented by the general formula (2a): CF₂=CY-O-Rf¹¹
   wherein Rf¹¹ is a perfluoroalkyl group or a perfluoroalkyl group containing oxygen atom between carbon-carbon atoms, and Y is F or a perfluoroalkyl group; and
a monomer represented by the general formula (2b): CF₂=CY-Rf¹²-X
   wherein Rf¹² is a perfluoroalkylene group, a perfluoroalkylene group containing oxygen atom between carbon-carbon atoms, a perfluorooxyalkylene group, or a perfluorooxyalkylene group containing oxygen atom between carbon-carbon atoms, X is -I, - CH₂I, -Br, -CH₂Br, or -CN, and Y is F or a perfluoroalkyl group.

Among the perfluoromonomers (2), furthermore preferred is the monomer represented by the general formula (2a): CF₂=CY-O-Rf¹¹
wherein Rf¹¹ is a perfluoroalkyl group or a perfluoroalkyl group containing oxygen atom between carbon-carbon atoms, and Y is F or a perfluoroalkyl group.

In a case in which the monomer represented by the general formula (2a) is used as the perfluoromonomer (2), it is also one preferred embodiment that the monomer represented by the general formula (2b) is used together with the monomer represented by the general formula (2a).

In the general formula (2a), Rf¹¹ is preferably a perfluoroalkyl group having 1 to 12 carbon atoms, or a perfluoroalkyl group having 2 to 12 carbon atoms and containing oxygen atom between carbon-carbon atoms.

In the general formula (2a), Y is preferably F or a perfluoroalkyl group having 1 to 12 carbon atoms and more preferably F or CF₃.

In the general formula (2b), Rf¹² is preferably a perfluoroalkylene group having 1 to 12 carbon atoms, a perfluoroalkylene group having 2 to 12 carbon atoms and containing oxygen atom between carbon-carbon atoms, a perfluorooxyalkylene group having 1 to 12 carbon atoms, or a perfluorooxyalkylene group containing oxygen atom between carbon-carbon atoms.

In the general formula (2b), Y is preferably F or a perfluoroalkyl group having 1 to 12 carbon atoms and more preferably F or CF₃.

The monomer represented by the general formula (2a) is preferably at least one selected from the group consisting of perfluoro(methyl vinyl ether), perfluoro(ethyl vinyl ether), and perfluoro(propyl vinyl ether), more preferably at least one selected from the group consisting of perfluoro(methyl vinyl ether) and perfluoro(propyl vinyl ether), and still more preferably perfluoro(methyl vinyl ether).

The monomer represented by the general formula (2b) is preferably at least one selected from the group consisting of CF₂=CFOCF₂CF(CF₃)OCF₂CF₂CN, CF₂=CFOCF₂CF(CF₃)OCF₂CF₂COOH, CF₂=CFOCF₂CF(CF₃)OCF₂CF₂CH₂I, CF₂=CFOCF₂CF₂CH₂I, and CF₂=CFO(CF₂)₅CN and more preferably at least one selected from the group consisting of CF₂=CFOCF₂CF(CF₃)OCF₂CF₂CN and CF₂=CFOCF₂CF₂CH₂I.

When a monomer having an iodine atom is used as the perfluoromonomer (2), the perfluoroelastomer can undergo a peroxide crosslinking reaction to obtain a crosslinked elastomer of a perfluoroelastomer having excellent mechanical properties. In this respect, the iodine content of the resulting perfluoroelastomer is preferably 0.02 to 5.0% by mass, more preferably 0.05 to 3.0% by mass, and still more preferably 0.1 to 2.0% by mass.

In the method for production of the present disclosure, the perfluoromonomer may be polymerized in the presence of a polymerization initiator. Representative examples of the polymerization initiators include dialkyl peroxycarbonates such as diisopropyl peroxydicarbonate and di-sec-butyl peroxydicarbonate; peroxy esters such as t-butyl peroxyisobutyrate and t-butyl peroxypivalate; dialkyl peroxides such as di-t-butyl peroxide; di[perfluoro (or fluorochloro) acyl] peroxides such as Di(ω-hydrododecafluoroheptanoyl)peroxide, Di(ω-hydrotetradecafluorooctanoyl)peroxide, di(ω-hydrohexadecafluorononanoyl)peroxide, di(perfluorobutyryl)peroxide, di(perfluorovaleryl)peroxide, di(perfluorohexanoyl)peroxide, di(perfluoroheptanoyl)peroxide, di(perfluorooctanoyl)peroxide, di(perfluorononanoyl)peroxide, di(ω-chlorohexafluorobutyryl)peroxide, di(ω)-chlorodecafluorohexanoyl)peroxide, di(ω-chlorotetradecafluorooctanoyl)peroxide, ω-hydrododecafluoroheptanoyl-ω-hydrohexadecafluorononanoyl-peroxide, ω**-**chloro-hexafluorobutyryl-ω-chloro-decafluorohexanoylperoxide, ω-hydrododecafluoroheptanoyl-perfluorobutyrylperoxide, di(dichloropentafluorobutanoyl)peroxide, di(trichlorooctafluorohexanoyl)peroxide, di(tetrachloroundecafluorooctanoyl)peroxide, di(pentachlorotetradecafluorodecanoyl)peroxide, and di(undecachlorodotoriacontafluorodocosanoyl)peroxide; iodine/bromine-containing peroxides such as di(3-iodo-2,2,3,3-tetrafluoropropanoyl) peroxide, di(difluoroiodoacetyl) peroxide, di(bromodifluoroacetyl) peroxide, and di(bromofluoroiodoacetyl) peroxide; nitrile-containing peroxides such as 3,3-dioxybis(2,2-difluoro-3-oxopropanenitrile).

The amount of polymerization initiator added is preferably 0.0001 to 10% by mass and more preferably 0.01 to 5% by mass, based on 100% by mass in total of the tetrafluoroethylene (1) and perfluoromonomer (2).

A timing of adding the polymerization initiator in polymerization is not limited, and it may be added before the start of polymerization or after the start of polymerization. In the above polymerization, the polymerization initiator may be added all at once at any time, or may be added continuously. Addition of polymerization initiator continuously means, for example, adding the polymerization initiator not all at once, but over time, and either continuously or separately. When added continuously, the polymerization initiator is preferably added so that the total amount of polymerization initiator added falls within the above-described range. In the case of addition of polymerization initiator, a solution containing the polymerization initiator and a fluorine-containing solvent may be prepared and then added.

In the method for production of the present disclosure, polymerization of the monomers is usually performed in the absence of a surfactant. Examples of the surfactants include a fluorine-containing surfactant. Examples of the fluorine-containing surfactants include, for example, an anionic fluorine-containing surfactant. The anionic fluorine-containing surfactant may be, for example, a surfactant containing fluorine atoms, in which the total number of carbon atoms of a moiety excluding anionic groups is 20 or less.

In the present disclosure, the phrase "substantially in the absence of a surfactant" means that the amount of surfactant based on the total mass of the tetrafluoroethylene (1) and perfluoromonomer (2) is 10 ppm by mass or less. The amount of the surfactant is preferably 1 ppm by mass or less, more preferably 100 ppb by mass or less, still more preferably 10 ppb by mass or less, and further preferably 1 ppb by mass or less.

A polymerization reaction of the tetrafluoroethylene (1) and perfluoromonomer (2) can be initiated, for example, by removing oxygen from a pressure-resistant reaction vessel equipped with a stirrer, charging the reaction vessel with the perfluoromonomer (2), adjusting temperature to a predetermined temperature, charging the reaction vessel with the tetrafluoroethylene (1), adjusting pressure to a predetermined pressure, and charging the reaction vessel with a polymerization initiator. When the predetermined amount of tetrafluoroethylene (1) is fed, the feeding is stopped, and then the tetrafluoroethylene (1) in the reaction vessel is purged, whereby the reaction is completed. In a case in which the pressure decreases as the reaction proceeds, the reaction vessel can be continuously or intermittently charged with additional tetrafluoroethylene (1) to maintain the initial pressure. Also, the reaction vessel can be continuously or intermittently charged with the additional perfluoromonomer (2), if necessary.

In one embodiment of the method for production of the present disclosure, after completion of the polymerization, the perfluoroelastomer generated is obtained in the reaction vessel in a state dissolved in the liquid perfluoromonomer (2). Therefore, the perfluoroelastomer solution in the reaction vessel is recovered and the recovered solution is then dried, as a result of which a lump of perfluoroelastomer can be obtained. A drying temperature is preferably 40 to 250°C.

In the method for production disclosed herein, a perfluoroelastomer is produced.

The elastomer in the present disclosure, is an amorphous polymer. The term "amorphous" means that a polymer has a melting peak (ΔH) of 4.5 J/g or lower as determined by differential scanning calorimetry (DSC) (temperature-increasing rate: 10°C/min) or differential thermal analysis (DTA) (temperature-increasing rate: 10°C/min). The perfluoroelastomer exhibits elastomeric characteristics when crosslinked. The elastomeric characteristics mean that a polymer has an ability to be stretched and to retain its original length when the force required to stretch the polymer is no longer applied.

The perfluoroelastomer in the present disclosure is a fluoropolymer having a perfluoromonomer unit content of 90 mol% or more and preferably 91 mol% or more, based on all polymerized units, having a glass transition temperature of 25°C or lower, and having a melting peak (ΔH) of 4.5 J/g or lower, and is a polymer further having a concentration of fluorine atoms contained in the fluoropolymer of 71% by mass or more and preferably 71.5% by mass or more. The fluorine atom concentration in the fluoropolymer in the present disclosure is the concentration (% by mass) of the fluorine atoms contained in the fluoropolymer calculated based on the type and content of each monomer constituting the fluoropolymer.

The content of each of the monomers constituting the perfluoroelastomer can be calculated in the present disclosure, by any appropriate combination of NMR, FT-IR, elemental analysis, X-ray fluorescence analysis, and other known methods in accordance with the types of the monomers.

The glass transition temperature of the perfluoroelastomer is 25°C or lower, preferably 5°C or lower, and more preferably 1°C or lower, and is preferably -70°C or higher, more preferably -60°C or higher, and still more preferably -50°C or higher.

The glass transition temperature can be determined as follows. Using a differential scanning calorimeter (DSC822e, manufactured by Mettler Toledo International Corporation), 10 mg of a sample is heated at a rate of 10°C/min to give a DSC curve, and a temperature that indicates a midpoint temperature between two intersecting points of extension lines of baselines before and after the secondary transition of the DSC curve with a tangent at an inflection point of the DSC curve is determined to be the glass transition temperature.

A ratio ((1)/(2)) of tetrafluoroethylene (1) units to perfluoromonomer (2) units in the perfluoroelastomer is preferably 45 to 90/55 to 10 (mol%). The perfluoroelastomer having such a molar ratio obtained by having adjusted the ratio of tetrafluoroethylene (1) and perfluoromonomer (2) charged into a reaction vessel allows a polymerization reaction of the tetrafluoroethylene (1) and perfluoromonomer (2) to proceed smoothly.

The perfluoroelastomer is preferably at least one selected from the group consisting of a copolymer of tetrafluoroethylene (TFE) and a fluoromonomer represented by the general formula (21), (22), or (23) and a copolymer of TFE, a fluoromonomer represented by the general formula (21), (22), or (23), and a monomer that provides a crosslinking site.

In the case of the TFE/perfluoro(methyl vinyl ether) (PMVE) copolymer, the composition ratio thereof is preferably 45 to 90/10 to 55 (mol%), more preferably 55 to 80/20 to 45, and even more preferably 55 to 70/30 to 45.

In the case of the copolymer of TFE, PMVE, and a monomer that provides a crosslinking site, the composition ratio thereof is preferably 45 to 89.9/10 to 54.9/0.01 to 4 (mol%), more preferably 55 to 77.9/20 to 49.9/0.1 to 3.5, and even more preferably 55 to 69.8/30 to 44.8/0.2 to 3.

In the case of the copolymer of TFE and a fluoromonomer represented by the general formula (21), (22), or (23) having 4 to 12 carbon atoms, the composition ratio thereof is preferably 50 to 90/10 to 50 (mol%), more preferably 60 to 88/12 to 40, and even more preferably 65 to 85/15 to 35.

In the case of the copolymer of TFE, a fluoromonomer represented by the general formula (21), (22), or (23) having 4 to 12 carbon atoms, and a monomer that provides a crosslinking site, the composition ratio thereof is preferably 50 to 89.9/10 to 49.9/0.01 to 4 (mol%), more preferably 60 to 87.9/12 to 39.9/0.1 to 3.5, and even more preferably 65 to 84.8/15 to 34.8/0.2 to 3.

When these copolymers have compositional features outside these ranges, the properties as a rubber elastic body are lost, and the properties tend to be close to those of a resin.

The perfluoroelastomer is preferably at least one selected from the group consisting of copolymers of TFE, a fluoromonomer represented by the general formula (23), and a fluoromonomer that provides a crosslinking site, copolymers of TFE and a perfluorovinyl ether represented by the general formula (23), copolymers of TFE and a fluoromonomer represented by the general formula (21), and copolymers of TFE, a fluoromonomer represented by the general formula (21), and a monomer that provides a crosslinking site.

Examples of the perfluoroelastomer further include the perfluoroelastomers disclosed in documents such as International Publication No. WO97/24381, Japanese Patent Publication No. 61-57324, Japanese Patent Publication No. 04-81608, and Japanese Patent Publication No. 05-13961.

From the viewpoint of achieving good heat resistance, the perfluoroelastomer preferably has a Mooney viscosity ML(1+20) at 170°C of 30 or higher, more preferably 40 or higher, and even more preferably 50 or higher. From the viewpoint of achieving good processability, the Mooney viscosity is preferably 150 or lower, more preferably 120 or lower, and even more preferably 110 or lower.

From the viewpoint of achieving good heat resistance, the perfluoroelastomer preferably has a Mooney viscosity ML(1+20) at 140°C of 30 or higher, more preferably 40 or higher, and even more preferably 50 or higher. From the viewpoint of achieving good processability, the Mooney viscosity is preferably 180 or lower, more preferably 150 or lower, and even more preferably 110 or lower.

From the viewpoint of achieving good heat resistance, the perfluoroelastomer preferably has a Mooney viscosity ML(1+10) at 100°C of 10 or higher, more preferably 20 or higher, and even more preferably 30 or higher. From the viewpoint of achieving good processability, the Mooney viscosity is preferably 120 or lower, more preferably 100 or lower, and even more preferably 80 or lower.

The Mooney viscosity can be determined using a Mooney viscometer MV2000E manufactured by Alpha Technologies Inc. at 170°C, 140°C, or 100°C in accordance with JIS K 6300.

To the perfluoroelastomer obtained by the method for production of the present disclosure is added a curing agent, a filler, or the like, to obtain a perfluoroelastomer composition.

Examples of the curing agent include polyols, polyamines, organic peroxides, organotins, bis(aminophenol)tetraamine, and bis(thioaminophenol).

By using and forming processing the above-described perfluoroelastomer, a perfluoroelastomer formed article can be obtained. The forming processing may be performed by any method without limitation such as a known method using the above-described curing agent. Examples of the forming method include, but are not limited to, compression molding, cast molding, injection molding, extrusion forming, and forming by Rotocure.

When the perfluoroelastomer composition contains a curing agent (cross-linking agent), by crosslinking the perfluoroelastomer composition, a crosslinked product can be obtained as the perfluoroelastomer formed article. As for the crosslinking method, steam crosslinking, crosslinking by heating, radiation crosslinking, and other methods can be adopted, and among them, steam crosslinking and crosslinking by heating are preferable. Non-limiting specific crosslinking conditions may be determined as appropriate in accordance with the types of crosslinking accelerator, cross-linking agent, acid acceptor, and others, usually within a temperature range of 140 to 250°C and a crosslinking time of 1 minute to 24 hours.

The perfluoroelastomer formed article is suitable for seals, gaskets, electric wire coatings, hoses, tubes, laminated products, and accessories, particularly parts for semiconductor manufacturing devices and automobile parts.

Although the embodiments have been described above, it will be understood that a wide variety of modifications can be made in the form and details without departing from the spirit and scope of the claims.
<1> According to the first aspect of the present disclosure,
   there is provided a method for producing a perfluoroelastomer, the method comprising polymerizing tetrafluoroethylene (1) and a perfluoromonomer (2) other than tetrafluoroethylene (1) in a reaction vessel to produce a perfluoroelastomer, wherein a volume of water and a fluorine-containing solvent occupying an internal volume of the reaction vessel is 2.0% by volume or less.
<2> According to the second aspect of the present disclosure, there is provided the method for production according to the first aspect, wherein the perfluoromonomer (2) is at least partially present as liquid in the reaction vessel.
<3> According to the third aspect of the present disclosure, there is provided the method for production according to the second aspect, wherein an internal pressure of the reaction vessel is equal to or higher than a saturated vapor pressure of the perfluoromonomer (2) at a temperature of liquid in the reaction vessel.
<4> According to the fourth aspect of the present disclosure, there is provided the method for production according to any one of the first to third aspects, wherein the perfluoromonomer (2) is
   a monomer represented by the general formula (2): CF₂=CY-Rf-X
   wherein Rf is a perfluoroalkylene group, a perfluoroalkylene group containing oxygen atom between carbon-carbon atoms, a perfluorooxyalkylene group, or a perfluorooxyalkylene group containing oxygen atom between carbon-carbon atoms; X is -F, - I, -CH₂I, -Br, -CH₂Br or -CN; and Y is F or a perfluoroalkyl group.
<5> According to the fifth aspect of the present disclosure, there is provided the method for production according to any one of the first to fourth aspects, wherein the perfluoromonomer (2) is at least one selected from the group consisting of:
   a monomer represented by the general formula (2a): CF₂=CY-O-Rf¹¹
      wherein Rf¹¹ is a perfluoroalkyl group or a perfluoroalkyl group containing oxygen atom between carbon-carbon atoms, and Y is F or a perfluoroalkyl group, and
   a monomer represented by the general formula (2b): CF₂=CY-Rf¹²-X
      wherein Rf¹² is a perfluoroalkylene group, a perfluoroalkylene group containing oxygen atom between carbon-carbon atoms, a perfluorooxyalkylene group, or a perfluorooxyalkylene group containing oxygen atom between carbon-carbon atoms; X is -I, - CH₂I, -Br, -CH₂Br or -CN; and Y is F or a perfluoroalkyl group.
<6> According to the sixth aspect of the present disclosure, there is provided the method for production according to any one of the first to fifth aspects, wherein the perfluoromonomer (2) is
   a monomer represented by the general formula (2a): CF₂=CY-O-Rf¹¹
   wherein Rf¹¹ is a perfluoroalkyl group or a perfluoroalkyl group containing oxygen atom between carbon-carbon atoms; and Y is F or a perfluoroalkyl group.
<7> According to a seventh aspect of the present disclosure, there is provided the method for production according to any one of the first to sixth aspects, wherein a glass transition temperature of the perfluoroelastomer is 25°C or lower.
<8> According to the eighth aspect of the present disclosure, there is provided the method for production according to any one of the first to seventh aspects, wherein a ratio ((1)/(2)) of tetrafluoroethylene (1) units to perfluoromonomer (2) units in the perfluoroelastomer is 45 to 90/55 to 10 (mol%)..
<9> According to the ninth aspect of the present disclosure, there is provided the method for production according to any one of the first to eighth aspects, wherein the polymerization is performed substantially in the absence of a surfactant.

### EXAMPLES

Hereinafter, the embodiments of the present disclosure will be described with reference to Examples, but the present disclosure is not limited solely to such Examples.

Each numerical value in Examples was measured by the following methods.

### (Polymer Composition)

The polymer composition was determined by a ¹⁹F-NMR (melt NMR) and Fourier transform infrared spectrophotometer (FT-IR).

### (Storage Elastic Modulus (G'))

Storage elastic modulus G' at 100°C and 1Hz upon a dynamic strain of 1% was measured using a rubber process analyzer (model: RPA2000) manufactured by ALPHA TECHNOLOGIES.

### (Iodine Content)

The iodine content was measured by elemental analysis.

### (Glass Transition Temperature)

The glass transition temperature was measured by using a differential scanning calorimeter (DSC822e, manufactured by Mettler Toledo International, Inc.) and increasing the temperature of 10 mg of the sample at 10°C/min, a DSC curve was obtained, and then the peak top temperature of the differential curve specified in JIS K6240 was taken as the glass transition temperature.

### [Example 1]

A 3 L stainless steel autoclave was subjected to vacuuming and substitution with nitrogen gas to remove oxygen, an inside of which was vacuumed to evacuate 2,332 g of 2-(2-(heptafluoropropoxy)-1,1,2,3,3,3-hexafluoropropoxy)-1,1,2,3,3,3-hexafluoropropyl(trifluorovinyl) ether (VE-1) and 68g of 1,1,2,2-tetrafluoro-3-iodo-1-(1,2,2-trifluoroethenoxy) propane. The temperature of the system was adjusted to 25°C under stirring, and tetrafluoroethylene (TFE) was introduced under pressure so that the pressure inside the polymerization vessel was 0.502 MPaG. 1.04 g of a perfluorohexane solution (DHP) containing 8% by mass of di-(2,2,3,3,4,4,5,5,6,6,7,7-dodecafluoroheptanoyl) peroxide and 5 g of VE-1 were introduced under pressure with nitrogen to initiate a reaction. When the pressure dropped to 0.490 MPaG, TFE was charged so that the pressure reached to 0.510 MPaG, and after 5 hours from the initiation of the reaction, 1.08 g of DHP and 5 g of VE-1 were introduced under pressure with nitrogen. This procedure was repeated until 90 g of TFE was charged, the supply was then stopped, gas in the autoclave was released, and a solution extracted after cooling was vacuum dried at 200°C, yielding 223.5 g of polymer. The resulting polymer was a TFE/VE-1 copolymer, containing TFE units and VE-1 units in a molar ratio (TFE/VE-1) of 84.0/16.0. The resulting polymer had a G' of 350 kPa at 100°C. The resulting polymer contained 0.69% by mass of iodine. The glass transition temperature was -16.2°C.

### [Example 2]

A 3 L stainless steel autoclave was subjected to vacuuming and substitution with nitrogen gas to remove oxygen, the inside of which was vacuumed to evacuate 2,332g of VE-1 and 68 g of 1,1,2,2-tetrafluoro-3-iodo-1-(1,2,2-trifluoroethenoxy) propane. The temperature of the system was adjusted to 25°C under stirring, and TFE was introduced under pressure so that the pressure inside the polymerization vessel was 0.714 MPaG. 3.60 g of DHP and 5 g of VE-1 were introduced under pressure with nitrogen to initiate a reaction. When the pressure dropped to 0.690 MPaG, TFE was charged so that the pressure reached to 0.705 MPaG, and after 5 hours from the initiation of the reaction, 1.08 g of DHP and 5 g of VE-1 were introduced under pressure with nitrogen. This procedure was repeated until 64 g of TFE was charged, the supply was then stopped, gas in the autoclave was released, and a solution extracted after cooling was vacuum dried at 200°C, yielding 165.0 g of polymer. The resulting polymer was a TFE/VE-1 copolymer, containing TFE units and VE-1 units in a molar ratio (TFE/VE-1) of 79.8/20.2. The resulting polymer had a G' of 70 kPa at 100°C. The resulting polymer contained 0.64% by mass of iodine. The glass transition temperature was -19.7°C.

### [Example 3]

A 3 L stainless steel autoclave was subjected to vacuuming and substitution with nitrogen gas to remove oxygen, an inside of which was vacuumed to evacuate 2,400g of VE-1, 20 g of 1,1,2,2-tetrafluoro-3-iodo-1-(1,2,2-trifluoroethenoxy) propane, and 2.5 g of 1,1,2,2,3,3,4,4-octafluoro-1,4-diiodobutane. The temperature of the system was adjusted to 25°C under stirring, and TFE was introduced under pressure so that the pressure inside the polymerization vessel was 0.610 MPaG. 2.08 g of DHP and 5 g of VE-1 were introduced under pressure with nitrogen to initiate a reaction. When the pressure dropped to 0.590 MPaG, TFE was charged so that the pressure reached to 0.605 MPaG, and after 8 hours and 12 hours from the initiation of the reaction, 1.80 g of DHP and 5 g of VE-1 were introduced under pressure with nitrogen. This procedure was repeated until 126 g of TFE was charged, the supply was then stopped, gas in the autoclave was released, and a solution extracted after cooling was vacuum dried at 200°C, yielding 372.8 g of polymer. The resulting polymer was a TFE/VE-1 copolymer, containing TFE units and VE-1 units in a molar ratio (TFE/VE-1) of 82.0/18.0. The resulting polymer had a G' of 24 kPa at 100°C. The resulting polymer contained 0.56% by mass of iodine. The glass transition temperature was - 20.6°C.

### [Example 4]

A 0.5 L stainless steel autoclave was subjected to vacuuming and substitution with nitrogen gas to remove oxygen, an inside of the vessel was vacuumed, and a temperature of the system was adjusted to 15°C under stirring, and 109 g of trifluoromethyl trifluorovinyl ether (VE-2) and 6.7 g of TFE was introduced. 2.05 g of DHP was introduced under pressure with nitrogen to initiate a reaction. The pressure at the initiation of the reaction was 0.575 MPaG. When the pressure dropped to 0.5640 MPaG, liquefied gas in the autoclave was extracted from the bottom valve of the autoclave. The liquified gas found to be liquid confirmed that the gas in the reaction vessel was in a liquefied state. The extracted liquid was received in a glass container, and the liquid in the glass container was evaporated, followed by drying at 100°C to obtain 0.2 g of polymer. The resulting polymer was a TFE/VE-2 copolymer, containing TFE units and VE-2 units in a molar ratio (TFE/VE-2) of 61.1/38.9. The glass transition temperature was 0.5°C.

## Claims

1. A method for producing a perfluoroelastomer, the method comprising polymerizing tetrafluoroethylene (1) and a perfluoromonomer (2) other than tetrafluoroethylene (1) in a reaction vessel to produce a perfluoroelastomer, wherein a volume of water and a fluorine-containing solvent occupying an internal volume of the reaction vessel is 2.0% by volume or less.

2. The method for production according to claim 1, wherein the perfluoromonomer (2) is at least partially present as liquid in the reaction vessel.

3. The method for production according to claim 2, wherein an internal pressure of the reaction vessel is equal to or higher than a saturated vapor pressure of the perfluoromonomer (2) at a temperature of liquid in the reaction vessel.

4. The method for production according to any one of claims 1 to 3, wherein the perfluoromonomer (2) is
a monomer represented by the general formula (2): CF₂=CY-Rf-X
wherein Rf is a perfluoroalkylene group, a perfluoroalkylene group containing oxygen atom between carbon-carbon atoms, a perfluorooxyalkylene group, or a perfluorooxyalkylene group containing oxygen atom between carbon-carbon atoms; X is -F, **-** I, -CH₂I, -Br, -CH₂Br or -CN; and Y is F or a perfluoroalkyl group.

5. The method for production according to any one of claims 1 to 4, wherein the perfluoromonomer (2) is at least one selected from the group consisting of:
a monomer represented by the general formula (2a): CF₂=CY-O-Rf¹¹
wherein Rf¹¹ is a perfluoroalkyl group or a perfluoroalkyl group containing oxygen atom between carbon-carbon atoms; and Y is F or a perfluoroalkyl group, and
a monomer represented by the general formula (2b): CF₂=CY-Rf¹²-X
wherein Rf¹² is a perfluoroalkylene group, a perfluoroalkylene group containing oxygen atom between carbon-carbon atoms, a perfluorooxyalkylene group, or a perfluorooxyalkylene group containing oxygen atom between carbon-carbon atoms; X is -I, - CH₂I, -Br, -CH₂Br or -CN; and Y is F or a perfluoroalkyl group.

6. The method for production according to any one of claims 1 to 5, wherein the perfluoromonomer (2) is
a monomer represented by the general formula (2a): CF₂=CY-O-Rf¹¹
wherein Rf¹¹ is a perfluoroalkyl group or a perfluoroalkyl group containing oxygen atom between carbon-carbon atoms; and Y is F or a perfluoroalkyl group.

7. The method for production according to any one of claims 1 to 6, wherein a glass transition temperature of the perfluoroelastomer is 25°C or lower.

8. The method for production according to any one of claims 1 to 7, wherein a ratio ((1)/(2)) of tetrafluoroethylene (1) units to perfluoromonomer (2) units in the perfluoroelastomer is 45 to 90/55 to 10 (mol%).

9. The method for production according to any one of claims 1 to 8, wherein the polymerization is performed substantially in the absence of a surfactant.
